# FASCICULE DE BREVET EUROPEEN

(11) **EP 2 219 948 B1**
(45) Date de publication et mention de la délivrance du brevet: **17.08.2011**
(21) Numéro de dépôt: 08863158.5
(22) Date de dépôt: 01.12.2008
(51) Int. Cl.: B64D 33/02

(54) **SYSTEME DE SORTIE D'AIR POUR UN BORD D'ATTAQUE D'AERONEF**
LUFTAUSLASSSYSTEM FÜR DIE EINTRITTSKANTE EINES FLUGZEUGES
AIR OUTLET SYSTEM FOR AIRCRAFT LEADING EDGE

(30) Priorité: 03.12.2007 FR 0759494
(43) Date de publication de la demande: 25.08.2010
(73) Titulaire: Airbus Opérations SAS, 31060 Toulouse (FR)
(72) Inventeur: CHELIN, Frédéric, F-32430 Encausse (FR); SURPLY, Thierry, F-31700 Cornebarrieu (FR); BOURDEAU, Christophe, F-31300 Toulouse (FR)
(74) Mandataire: Fantin, Laurent
(86) Numéro de dépôt international: PCT/FR2008/052165
(87) Numéro de publication internationale: WO 2009/077689

(56) Documents cités:
- EP-A- 0 934 878
- WO-A-2007/007108
- US-A- 3 933 327
- US-A- 4 154 256
- US-A- 4 738 416
- US-A- 5 841 079

## Description

La présente invention se rapporte à un système de sortie d'air pour un bord d'attaque d'aéronef, plus particulièrement adapté au bord d'attaque d'une nacelle d'aéronef, ledit système permettant de limiter les risques de décollement du flux d'air de la paroi aérodynamique découlant notamment de la variation de l'incidence de l'aéronef et/ou de l'orientation de rafales de vent.

Un ensemble propulsif d'aéronef comprend une nacelle dans laquelle est disposée de manière sensiblement concentrique une motorisation reliée par l'intermédiaire d'un mât au reste de l'aéronef.

La nacelle comprend une première paroi délimitant un conduit avec une entrée d'air à l'avant, une première partie du flux d'air entrant, appelée flux primaire, traversant la motorisation pour participer à la combustion, la seconde partie du flux d'air, appelée flux secondaire, étant entrainée par une soufflante et s'écoulant dans un conduit annulaire délimité par la première paroi de la nacelle et la paroi extérieure de la motorisation.

La nacelle comprend également une seconde paroi, dite extérieure, de sections sensiblement circulaires, qui s'étend depuis l'entrée d'air jusqu'à la sortie arrière, constituée par la juxtaposition de plusieurs éléments ainsi qu'une lèvre, matérialisant l'entrée d'air, reliant la première paroi et la seconde paroi.

Pour la suite de la description, l'axe longitudinal de la nacelle correspond à l'axe de la motorisation.

Lorsque le flux d'air entrant dans la nacelle est orienté avec un angle important par rapport à l'axe longitudinal de la nacelle, cela provoque un phénomène de décollement du flux d'air par rapport à la surface aérodynamique. Ce phénomène a des conséquences sur le bon fonctionnement du moteur. Le décollement du flux d'air est caractérisé par une zone d'inversion de la direction de l'écoulement. Le début de cette zone correspond à une ligne sensiblement perpendiculaire à la direction principale de l'écoulement, appelée par la suite ligne de décollement. Ce phénomène de décollement peut apparaître aussi bien au sol, en particulier lors des phases de décollage par vent de travers, qu'en vol, en particulier lors de manoeuvres aux grandes incidences à basse vitesse.

Durant ces phases, la ligne de décollement s'étend à l'intérieur de l'entrée d'air sur une partie plus ou moins étendue circonférentiellement, située généralement en partie supérieure ou latérale dans les conditions de point fixe ou de décollage, et en partie basse dans les conditions de manoeuvre en vol.

Ainsi, selon un mode de réalisation courant, la taille de la nacelle ainsi que l'épaisseur des profils de la partie frontale de la nacelle sont définis en fonction de ces conditions de fonctionnement. Il en résulte une pénalité sur les performances de la nacelle dans les autres conditions de vol, en particulier en croisière.

Selon les conditions de vol, la direction de vent au sol, la vitesse et l'incidence de l'avion en vol ou du régime du moteur, la position de la ligne de décollement est variable. Ainsi, par exemple, plus l'incidence est élevée et plus cette ligne de décollement se rapproche de la partie frontale (bord d'attaque) de l'entrée d'air, tandis que plus la vitesse de l'avion ou le régime moteur sont élevés, et plus elle s'en éloigne.

On connaît le document US 4154256 et, d'après le document EP-1.156.962, une technique permettant d'empêcher le décollement d'un flux aérodynamique d'une paroi consistant à injecter un flux d'air, sensiblement tangentiel à la paroi, selon une direction parallèle au flux aérodynamique, au droit ou juste en aval de la ligne de décollement. En ajustant les caractéristiques aérodynamiques du flux d'air injecté, on limite les risques d'apparition du phénomène de décollement.

Selon ce document, les points d'injection du flux d'air sont disposés selon une ligne sensiblement parallèle à la ligne de décollement.

Par conséquent, comme pour la forme géométrique, cette solution pour empêcher l'apparition du phénomène de décollement ne permet de traiter que des plages réduites de l'angle d'incidence et de la vitesse relative entre le flux d'air et l'aéronef.

Aussi, la présente invention vise à pallier aux inconvénients de l'art antérieur en proposant un dispositif de sortie d'air permettant de limiter l'apparition du phénomène de décollement au niveau d'un bord d'attaque d'un aéronef sur des plages d'angle d'incidence, de vitesse de l'avion et de régime moteur plus importantes en vol, ainsi que sur des plages de direction et de vitesse du vent relatif plus élevées au sol.

A cet effet, l'invention a pour objet un bord d'attaque d'aéronef prolongé par une surface aérodynamique au niveau de laquelle s'écoulent un flux aérodynamique et où sont disposées des sorties d'air en vue d'empêcher le décollement dudit flux aérodynamique, les sorties d'air étant disposées selon au moins deux rangées sensiblement parallèles au bord d'attaque et de manière décalée pour au moins deux rangées consécutives, caractérisé en ce qu'il comprend au moins une cale intercalée entre deux parois formant la surface aérodynamique, ladite cale comprenant d'une part une surface extérieure dans le prolongement de la surface aérodynamique, une première surface inclinée en contact avec la première paroi formant la surface aérodynamique et une seconde surface inclinée en contact avec la seconde paroi formant la surface aérodynamique, et d'autre part, des formes en saillie et/ou en creux ménagées au niveau des surfaces inclinées et disposées de manière alternée d'une face à l'autre autorisant le passage de l'air de part et d'autre de la surface aérodynamique. D'autres caractéristiques et avantages ressortiront de la description qui va suivre de l'invention, description donnée à titre d'exemple uniquement, en regard des dessins annexés sur lesquels :
- la figure 1A est une vue en perspective illustrant la zone de décollement au moment du décollage,
- la figure 1B est une vue en perspective illustrant la zone de décollement lors d'une rafale,
- la figure 2 est une vue en perspective illustrant une entrée d'air selon l'invention,
- la figure 3A est une vue de dessus illustrant l'agencement des sorties d'air selon une première variante de l'invention,
- la figure 3B est une vue de dessus illustrant l'agencement des sorties d'air selon une autre variante de l'invention,
- la figure 3C est une vue de dessus illustrant l'agencement des sorties d'air selon une autre variante de l'invention,
- la figure 4 est une coupe d'une entrée d'air d'une nacelle illustrant les sorties d'air,
- la figure 5 est une coupe de la paroi du conduit d'une nacelle illustrant en détails une cale comportant des sorties d'air selon un mode de réalisation,
- la figure 6 est une vue en perspective illustrant la cale de la figure 5, et
- la figure 7 est une vue de face illustrant une entrée d'air d'une nacelle d'aéronef.

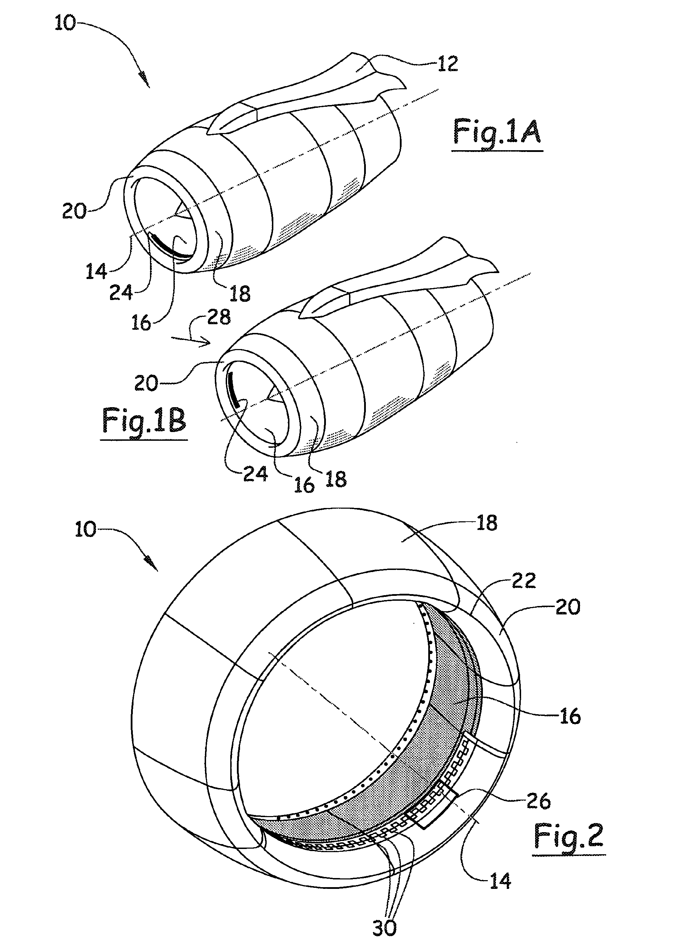

Sur les figures 1A et 1B, on a représenté un ensemble propulsif d'aéronef comprenant une nacelle 10 dans laquelle est disposée de manière sensiblement concentrique une motorisation reliée par l'intermédiaire d'un mât 12 au reste de l'aéronef. Pour la suite de la description, l'axe longitudinal 14 correspond à l'axe de la motorisation.

La nacelle 10 comprend une première paroi 16 définissant un conduit, une seconde paroi 18, dite extérieure, et une lèvre 20 reliant la première paroi 16 et la seconde paroi 18 définissant une entrée d'air dans laquelle pénètre un flux d'air.

Une première partie du flux d'air pénétrant dans l'entrée d'air, appelée flux primaire, traverse la motorisation pour participer à la combustion, alors qu'une seconde partie, appelée flux secondaire, entraînée par une soufflante, s'écoule dans un conduit annulaire délimité par la première paroi de la nacelle et la paroi extérieure de la motorisation.

La lèvre 20 de la nacelle comprend un bord d'attaque 22 qui correspond à la partie frontale de la nacelle.

Même si elle est décrite appliquée à une nacelle, l'invention peut s'appliquer à tous les bord d'attaque d'un aéronef, ces derniers pouvant être courbes dans le cas d'une nacelle ou sensiblement rectilignes dans le cas d'une voilure. En l'absence d'effets liés au moteur, la variation de la position de la ligne de décollement est due aux effets combinés de l'incidence et de la vitesse de l'avion. Pour la suite de la description, on entend par surface aérodynamique, une surface de l'aéronef en contact avec l'air environnant, contre laquelle s'écoule un flux d'air en vol.

En fonction de certaines caractéristiques du flux d'air, une ligne de décollement peut apparaître au niveau de la surface aérodynamique, ladite ligne de décollement étant plus ou moins éloignée du bord d'attaque.

Dans le cas d'une nacelle, une ligne de décollement 24 peut apparaître au niveau de la surface aérodynamique 26 délimitant le conduit 16 et s'étendant en aval du bord d'attaque 22. Cette ligne de décollement, plus ou moins étendue dans le sens de la circonférence du conduit 16 peut être positionnée comme illustré sur la figure 1A au niveau de la partie basse de la surface aérodynamique 26, par exemple en cas de vol avec une grande incidence de l'avion, au niveau de la partie haute de la surface aérodynamique 26, par exemple en cas de point fixe à un fort régime moteur ou au niveau d'une partie latérale de la surface aérodynamique 26 comme illustré sur la figure 1B, par exemple en cas de décollage avec un fort vent de travers.

La position de la ligne de décollement 24 par rapport au bord d'attaque et notamment la distance la séparant du bord d'attaque varie en fonction des conditions de vol.

Ainsi, par exemple, plus l'incidence est élevée et plus cette ligne de décollement se rapproche de la partie frontale (bord d'attaque) de l'entrée d'air, tandis que plus la vitesse de l'avion ou le régime moteur sont élevés, et plus elle s'en éloigne. La ligne de décollement 24 s'étend sur au moins une portion de la circonférence de la nacelle.

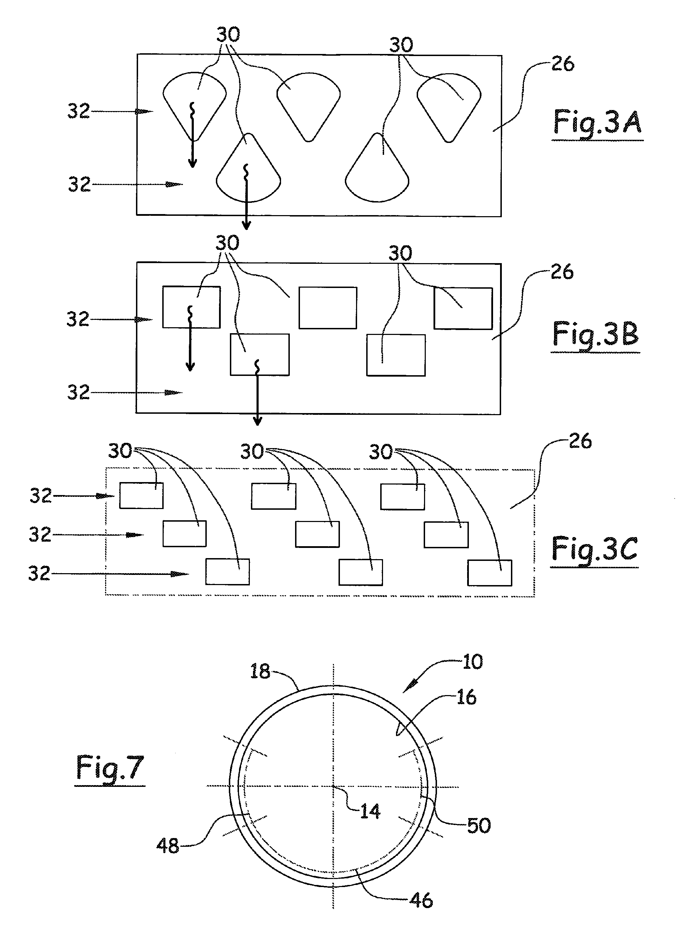

Selon l'invention, la surface aérodynamique 26 comprend des sorties d'air 30 disposées selon au moins deux rangées 32 sensiblement parallèles au bord d'attaque 22, les sorties d'air 30 étant disposées de manière décalée, selon une direction perpendiculaire à l'axe longitudinal, pour au moins deux rangées consécutives. Comme illustré sur les figures 3A et 3B, dans le cas de deux rangées les sorties d'air sont alternées.

Le fait de disposer les sorties d'air 30 selon plusieurs rangées sensiblement parallèles au bord d'attaque permet d'augmenter la largeur de la bande traitée par les sorties d'air et autorise les fluctuations de la ligne de décollement dans ladite plage.

La discontinuité des sorties d'air permet de diminuer le débit nécessaire par rapport à une configuration avec plusieurs fentes continues s'étendant selon le sens d'écoulement sur toute la plage.

Par ailleurs, le fait de disposer les sorties d'air 30 de manière décalée d'une rangée à l'autre permet au flux d'air sortant d'une première sortie disposée au niveau d'une rangée en amont de ne pas perturber la sortie d'air disposée au niveau d'une rangée en aval. Enfin, cette disposition alternée maximise l'effet favorable des tourbillons générés à chaque discontinuité d'orifice sur la stabilisation de l'écoulement.

Comme illustré sur les figures 3A à 3C, les sorties d'air 30 peuvent avoir différentes formes de section.

Ainsi, comme illustré sur la figure 3A, les sorties d'air 30 peuvent avoir une forme en secteur de disque, les formes étant toutes orientées de la même manière d'une rangée à l'autre ou de manière inversée d'une rangée à l'autre, comme illustré sur la figure 3A.

Selon une autre variante, les sorties d'air 30 peuvent avoir une section carrée ou rectangulaire comme illustré sur les figures 3B et 3C.

Les sorties d'air sont disposées selon deux rangées, comme illustré sur les figures 3A et 3B, ou selon trois rangées ou plus comme illustré sur la figure 3C. De plus, la distance entre les rangées peut être constante ou varier entre deux rangées consécutives.

Selon les cas, les rangées pourraient avoir des sorties toutes identiques ou différentes en fonction des rangées ou des zones du bord d'attaque.

Selon les cas, les rangées peuvent s'étendre sur toute la circonférence de la nacelle ou sur au moins une portion de la circonférence, selon la configuration et le domaine opérationnel de l'avion et après identification des zones les plus à risque vis-à-vis des phénomènes de décollement.

Les formes des sorties sont adaptées pour que l'air sortant soit injecté avec une orientation inclinée proche de la surface aérodynamique. A titre indicatif, l'air injecté forme un angle variant de 5 à 45° par rapport à la surface aérodynamique.

Le débit d'air est ajusté afin d'empêcher le décollement du flux aérodynamique. Selon les variantes, l'air peut être prélevé soit dans le moteur au niveau du flux primaire, soit dans la nacelle au niveau du flux secondaire, soit directement à l'extérieur via une ou plusieurs écopes, soit au niveau du dégivrage pneumatique du bord d'attaque, une fois l'air refroidie par échange thermique avec les surfaces froides à dégivrer.

Selon une autre caractéristique de l'invention, le dispositif comprend des moyens pour répartir l'air et l'orienter vers certaines sorties en fonction des besoins. Ainsi, le dispositif de l'invention permet de sélectionner la ou les zone(s) traitée(s) et comprend des vannes qui permettent d'orienter le flux d'air injecté vers certains secteurs de l'entrée d'air.

A titre d'exemple, en vol à basse vitesse, seule la partie inférieure de l'entrée d'air a réellement besoin d'être alimentée. Le pilote commande alors l'ouverture des vannes pour alimenter les sorties d'air disposées en partie inférieure de l'entrée d'air.

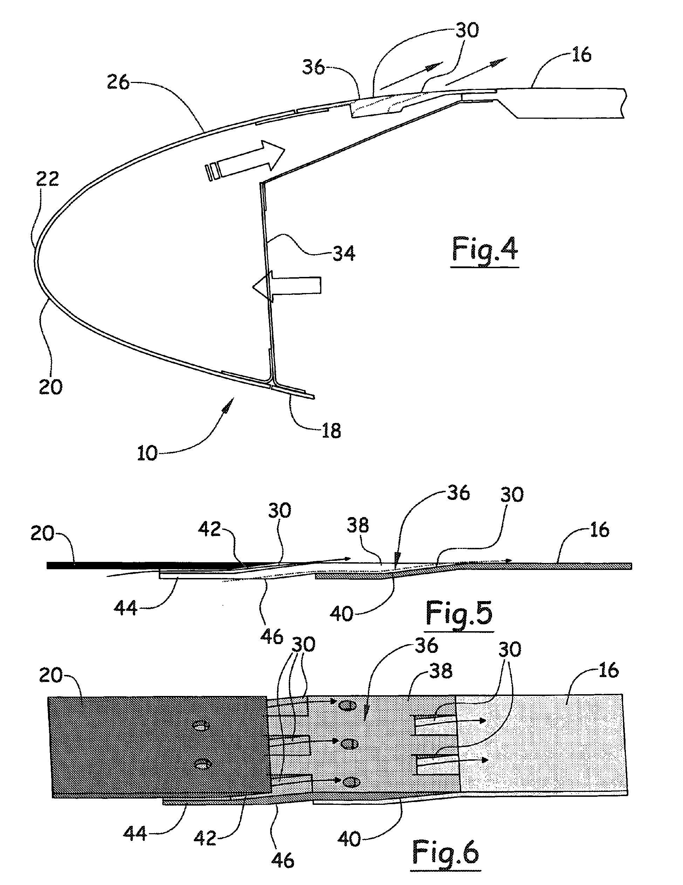

Sur les figures 4, 5 et 6, on a représenté un mode de réalisation du dispositif selon l'invention appliqué à une nacelle.

La nacelle comprend une paroi formant le conduit 16, une paroi 18 formant la surface extérieure, une lèvre 20 et un cadre avant 34 reliant les parois 16 et 18 et supportant la lèvre 20. Différentes configurations sont envisageables pour assurer la liaison entre ces différents éléments.

Selon l'invention, le dispositif comprend au moins une cale 36 intercalée entre deux parois formant la surface aérodynamique, dans l'exemple illustré entre la paroi formant la lèvre 20 et la paroi formant le conduit 16, ladite cale comprenant au niveau des surfaces en contact avec la paroi 16 et la lèvre 20 des formes en saillie et/ou en creux autorisant le passage de l'air depuis la zone interne de la nacelle vers la zone externe, de part et d'autre de ladite cale 36. Pour la description, on appelle la zone intérieure de la nacelle, la zone délimitée par les parois 16 et 18 et la lèvre 20. La zone extérieure comprend notamment la veine d'air s'écoulant dans le conduit 16.

Les formes en saillie et/ou en creux de la cale en contact avec la lèvre 20 forment une première rangée de sorties d'air, les formes en saillie et/ou en creux de la cale en contact avec la paroi 16 formant une seconde rangée de sorties d'air.

Comme illustré sur les figures 4, 5 et 6, les sorties d'air sont de type affleurant. Ainsi, la cale 36 comprend une surface extérieure 38 dans le prolongement de la surface aérodynamique 26, une première surface inclinée 40 en contact avec la paroi 16 formant un angle aigu avec la surface extérieure 38, une seconde surface inclinée 42 en contact avec la lèvre 20 sensiblement parallèle à la première surface inclinée 40. L'inclinaison des première et seconde surfaces 40 et 42 permet d'ajuster l'angle d'inclinaison du flux d'air injecté via les sorties d'air 30.

Les formes en creux et/ou en saillie sont ménagées au niveau des surfaces inclinées 40 et 42 et débouchent d'une part au niveau de la surface extérieure 38, et d'autre part, au niveau de la zone interne, les formes en saillie et/ou en creux étant disposées de manière alternée d'une face à l'autre.

Selon un mode de réalisation amélioré, la cale 36 comprend une partie 44 de faible épaisseur qui se prolonge sous la lèvre 20 et une surface intérieure 46 avec un décrochement pour loger une partie de la paroi 16. Dans ce cas, la première série de formes en saillie et/ou en creux s'étendent depuis la surface de la partie 44 en contact avec la lèvre 20 jusqu'à la surface extérieure 38 et la seconde série de formes en saillie et/ou en creux s'étendent depuis la surface intérieure 46 jusqu'à la surface extérieure 38.

La cale 36 peut comprendre une seule pièce qui s'étend sur au moins une partie de la circonférence de la nacelle ou comprendre plusieurs tronçons mis bout à bout s'étendant sur au moins une partie de la circonférence.

Selon les variantes, le dispositif peut comprendre selon la direction de l'axe longitudinal une cale 36 ou plusieurs cales 36 accolées ou non.

Selon un mode de réalisation, le cadre avant 34 et la lèvre 20 délimitent une zone qui peut être compartimentée afin de séparer l'alimentation en air des sorties 30. Ainsi en alimentant, un ou plusieurs compartiment(s), on peut rendre actives certaines sorties d'air et pas d'autres.

## Revendications

1. Bord d'attaque d'aéronef prolongé par une surface aérodynamique (26) au niveau de laquelle s'écoulent un flux aérodynamique et où sont disposées des sorties d'air (30) en vue d'empêcher le décollement dudit flux aérodynamique, les sorties d'air (30) étant disposées selon au moins deux rangées (32) sensiblement parallèles au bord d'attaque (22) et de manière décalée pour au moins deux rangées consécutives, **caractérisé en ce qu'**il comprend au moins une cale (36) intercalée entre deux parois formant la surface aérodynamique (26), ladite cale comprenant d'une part une surface extérieure (38) dans le prolongement de la surface aérodynamique (26), une première surface inclinée (40) en contact avec la première paroi formant la surface aérodynamique et une seconde surface inclinée (42) en contact avec la seconde paroi formant la surface aérodynamique, et d'autre part, des formes en saillie et/ou en creux ménagées au niveau des surfaces inclinées (40, 42) et disposées de manière alternée d'une face à l'autre autorisant le passage de l'air de part et d'autre de la surface aérodynamique (26).

2. Bord d'attaque d'aéronef selon la revendication 1, **caractérisé en ce que** les formes des sorties (30) sont adaptées pour que l'air sortant soit injecté avec une orientation inclinée proche de la surface aérodynamique.

3. Bord d'attaque d'aéronef selon la revendication 1 ou 2, **caractérisé en ce qu'**il comprend des moyens pour répartir l'air et l'orienter vers certaines sorties.

4. Nacelle d'aéronef comprenant une lèvre (20) reliant une surface extérieure (18) et un conduit (16) à l'intérieur duquel est placée une motorisation, ladite lèvre (20) formant un bord d'attaque prolongé par ledit conduit (16) au niveau duquel sont disposées des sorties d'air (30) disposées selon au moins deux rangées (32) sensiblement parallèles au bord d'attaque (22) et de manière décalée pour au moins deux rangées consécutives, **caractérisée en ce qu'**elle comprend au moins une cale (36) intercalée entre deux parois formant ledit conduit (16), ladite cale comprenant d'une part une surface extérieure (38) dans le prolongement de la surface dudit conduit (16), une première surface inclinée (40) en contact avec la première paroi formant ledit conduit (16) et une seconde surface inclinée (42) en contact avec la seconde paroi formant ledit conduit (16), et d'autre part, des formes en saillie et/ou en creux ménagées au niveau des surfaces inclinées (40, 42) et disposées de manière alternée d'une face à l'autre autorisant le passage de l'air.

5. Nacelle d'aéronef selon la revendication 4, **caractérisée en ce qu'**elle comprend au moins une cale (36) entre la paroi formant la lèvre (20) et la paroi formant le conduit (16).

6. Nacelle d'aéronef selon la revendication 4 ou 5, **caractérisée en ce qu'**elle comprend une zone à l'intérieur de la lèvre (20) compartimentée afin de séparer l'alimentation en air des sorties (30).

## Claims

1. An aircraft leading edge that is extended by an aerodynamic surface (26) at which flows an aerodynamic flow and where air discharges (30) are arranged for the purpose of preventing the separation of said aerodynamic flow, the air discharges (30) being arranged in at least two rows (32) that are essentially parallel to the leading edge (22) and in an offset manner for at least two consecutive rows, **characterized in that** it comprises at least one block (36) that is inserted between two walls that form the aerodynamic surface (26), whereby said block comprises, on the one hand, an outside surface (38) in the extension of the aerodynamic surface (26), a first inclined surface (40) that is in contact with the first wall that forms the aerodynamic surface and a second inclined surface (42) that is in contact with the second wall that forms the aerodynamic surface, and, on the other hand, projecting and/or hollow shapes that are made at the inclined surfaces (40, 42) and that are arranged in an alternating fashion from one surface to the next, allowing air to pass on both sides of the aerodynamic surface (26).

2. Aircraft leading edge according to claim 1, wherein the shapes of the discharges (30) are adapted so that the discharging air is injected with an inclined orientation that is close to the aerodynamic surface.

3. Aircraft leading edge according to claim 1 or 2, wherein it comprises means for distributing the air and orienting it toward certain discharges.

4. Aircraft nacelle that comprises a lip (20) that connects an outside surface (18) and a duct (16) inside of which is placed a power plant, whereby said lip (20) forms a leading edge that is extended by said duct (16) at which are arranged air discharges (30) that are arranged in at least two rows (32) that are essentially parallel to the leading edge (22) and in an offset manner for at least two consecutive rows, **characterized in that** it comprises at least one block (36) that is inserted between two walls that form said duct (16), whereby said block comprises, on the one hand, an outside surface (38) in the extension of the surface of said duct (16), a first inclined surface (40) in contact with the first wall that forms said duct (16), and a second inclined surface (42) in contact with the second wall that forms said duct (16), and, on the other hand, projecting and/or hollow shapes that are made at the inclined surfaces (40, 42) and that are arranged in an alternating fashion from one surface to the next, allowing air to pass.

5. Aircraft nacelle according to claim 4, wherein it comprises at least one block (36) between the wall that forms the lip (20) and the wall that forms the duct (16).

6. Aircraft nacelle according to claim 4 or 5, wherein it comprises a zone inside the lip (20) that is compartmented so as to separate the supply of air of the discharges (30).

## Patentansprüche

1. Profilnase eines Luftfahrzeugs, die durch eine aerodynamische Oberfläche (26) verlängert ist, an der eine aerodynamische Strömung fließt, und wo Auslässe (30) für Luft angeordnet sind, um eine Ablösung der aerodynamischen Strömung zu verhindern, wobei die Auslässe (30) für Luft in mindestens zwei Reihen (32) zur Profilnase (22) etwa parallel und für zumindest zwei aufeinanderfolgende Reihen auf eine versetzte Weise angeordnet sind, **dadurch gekennzeichnet, dass** sie wenigstens eine zwischen zwei die aerodynamische Oberfläche (26) ausbildenden Wänden eingefügte Abstützung (36) umfasst, wobei die Abstützung einerseits eine in der Verlängerung der aerodynamischen Oberfläche (26) angeordnete Außenoberfläche (38), eine erste geneigte Oberfläche (40) in Kontakt mit der ersten die aerodynamische Oberfläche ausbildenden Wand und eine zweite geneigte Oberfläche (42) in Kontakt mit der zweiten die aerodynamische Oberfläche ausbildenden Wand umfasst, und andererseits vorspringende und/oder vertiefte Formen, die in dem Bereich der geneigten Oberflächen (40, 42) vorgesehen und wechselweise von einer Seite zur anderen angeordnet sind und den Durchgang von Luft beiderseits der aerodynamischen Oberfläche (26) zulassen.

2. Profilnase eines Luftfahrzeugs nach Anspruch 1, **dadurch gekennzeichnet, dass** die Formen der Auslässe (30) so angepasst sind, dass die austretende Luft mit einer geneigten Ausrichtung nahe der aerodynamischen Oberfläche eingespritzt werden kann.

3. Profilnase eines Luftfahrzeugs nach Anspruch 1 oder 2, **dadurch gekennzeichnet, dass** sie Mittel zur Luftverteilung und zur Führung zu bestimmten Auslässen umfasst.

4. Triebwerksgondel eines Luftfahrzeugs, umfassend eine Lippe, die eine Außenoberfläche (18) und einen Kanal, in dem ein Motorantrieb angeordnet ist, verbindet, wobei die Lippe (20) eine durch den Kanal (16) verlängerte Profilnase bildet, bei welchen Auslässe (30) für Luft in wenigstens zwei Reihen (32) etwa parallel zur Profilnase (22) und auf eine versetzte Weise für zumindest zwei aufeinanderfolgende Reihen angeordnet sind, **dadurch gekennzeichnet, dass** sie wenigstens eine zwischen zwei den Kanal (16) ausbildenden Wänden eingefügte Abstützung (36) umfasst, wobei die Abstützung einerseits eine in der Verlängerung der Oberfläche des Kanals (16) angeordnete Außenoberfläche (38), eine erste geneigte Oberfläche (40) in Kontakt mit der ersten den Kanal (16) ausbildenden Wand und eine zweite geneigte Oberfläche (42) in Kontakt mit der zweiten den Kanal (16) ausbildenden Wand, und andererseits vorspringende und/oder vertiefte Formen, die in dem Bereich der geneigten Oberflächen (40, 42) vorgesehen und wechselweise von einer Seite zur anderen angeordnet sind und den Durchgang von Luft ermöglichen.

5. Triebwerksgondel eines Luftfahrzeugs nach Anspruch 4, **dadurch gekennzeichnet, dass** sie zwischen der die Lippe (20) ausbildenden Wand und der den Kanal (16) ausbildenden Wand wenigstens eine Abstützung (36) umfasst.

6. Triebwerksgondel eines Luftfahrzeugs nach Anspruch 4 oder 5, **dadurch gekennzeichnet, dass** sie innerhalb der abgeteilten Lippe (20) einen abgeteilten Bereich umfasst, um die Luftspeisung von den Luftauslässen (30) trennen zu können.
